# EUROPÄISCHE PATENTANMELDUNG

(11) **EP 4 488 074 A1**
(43) Veröffentlichungstag der Anmeldung: **08.01.2025**
(21) Anmeldenummer: 23184183.4
(22) Anmeldetag: 07.07.2023
(51) Int. Cl.: B60C 1/00, C08L 9/00

(54) **KAUTSCHUKMISCHUNGEN ENTHALTEND POLYETHYLENIMIN UND MINDESTENS EIN PROZESSHILFSMITTEL ENTHALTEND MINDESTENS EINE FETTSÄURE**

(71) Anmelder: LANXESS Deutschland GmbH, 50569 Köln (DE)
(72) Erfinder: Albers, Antonia, 50677 Köln (DE); Weidenhaupt, Hermann-Josef, 50259 Pullheim (DE); Oprisoni, Cristian, 68723 Oftersheim (DE)

(57) **Zusammenfassung**

Die Erfindung betrifft Kautschukmischungen enthaltend mindestens einen Kautschuk, mindestens einen hydroxylgruppenhaltigen oxidischen Füllstoff, mindestens ein Verstärkungsadditiv aus der Reihe der schwefelhaltigen organischen Silane, mindestens einen Vernetzer aus der Reihe Schwefel und Schwefelspender, mindestens einen Vulkanisationsbeschleuniger, der Polyethylenimin enthält, mindestens ein Prozesshilfsmittel enthaltend mindestens eine Fettsäure, wobei der Gesamtgehalt an Diphenylguanidin (DPG), Di-ortho-tolyl-guanidin (DOTG) und 1-(ortho-Tolyl)biguanid in der Kautschukmischung maximal 0,4 phr, bevorzugt maximal 0,2 phr, besonders bevorzugt maximal 0,1 phr und ganz besonders bevorzugt maximal 0,01 phr beträgt, deren Herstellung und Verwendung, sowie die dadurch erhältlichen Vulkanisate nach dem Vulkanisationsverfahren, insbesondere in Form von Reifen, Teilen von Reifen oder technischen Gummiartikeln.

## Beschreibung

Die Erfindung betrifft Kautschukmischungen, enthaltend je mindestens einen Kautschuk, mindestens einen hydroxylgruppenhaltigen oxidischen Füllstoff, mindestens ein Verstärkungsadditiv aus der Reihe der schwefelhaltigen organischen Silane, mindestens einen Vernetzer aus der Reihe Schwefel und Schwefelspender, mindestens einen Vulkanisationsbeschleuniger, der Polyethylenimin enthält, sowie mindestens ein Prozesshilfsmittel enthaltend mindestens eine Fettsäure, deren Herstellung und Verwendung, sowie die dadurch erhältlichen Vulkanisate nach dem Vulkanisationsverfahren, insbesondere in Form von Reifen, Teilen von Reifen oder technischen Gummiartikeln.

Mit der Vulkanisation von Naturkautschuk wurde ein neuer Werkstoff geschaffen, dessen einzigartiges Eigenschaftsprofil wesentlich zur Entwicklung der modernen Technik beigetragen hat. Zu Beginn des 20. Jahrhunderts erkannte man die beschleunigende Wirkung basischer organischer Verbindungen für die Vulkanisation.

So sind beispielsweise Anilin und andere stickstoffhaltige organische Verbindungen wie Hexamethylentetramin oder Thiocarbanilid als Beschleuniger eingesetzt worden.

Für die Vernetzung von Kautschukmischungen wird häufig Schwefel eingesetzt. Generell bietet die Vernetzung von Kautschuken mit Schwefel-Beschleuniger-Systemen den Vorteil, dass durch die Verwendung unterschiedlicher Beschleuniger und deren Kombinationen die Verarbeitungs- und Produkteigenschaften über einen weiten Bereich variiert werden können, wie beispielsweise die Einstellung der Induktionsperiode (Scorch-Zeit), welche möglichst nicht zu kurz ausfallen soll, und der Reaktionsgeschwindigkeit, die vorzugsweise hoch ist und dadurch zu einer kurzen Ausvulkanisationszeit führt. Zur Regulierung der Induktions- und Vulkanisationszeit können den Kautschukmischungen sogenannte Zweitbeschleuniger zugesetzt werden.

Zu den bekanntesten Zweitbeschleunigern zählen die Guanidin-Beschleuniger. Sie sind langsam wirkende Beschleuniger, mit denen die An(Scorch)- und/oder Ausvulkanisationszeit angepasst werden kann.

Die Spannungswertcharakteristik als Indikator des Vulkanisationsfortschritts von Kautschukmischungen mit Guanidin-Beschleunigern zeichnet sich typischerweise durch einen langsamen Anstieg und relativ spätes Erreichen des Maximums aus. Diese Beschleuniger führen, alleine eingesetzt, meist zu einem verhältnismäßig ungünstigen Fließzeit/Heizzeit-Verhältnis und zu einer relativ starken Reversion im Kautschukvulkanisat. Um diese Nachteile zu vermeiden, werden sie häufig in Kombinationen mit Primär-Beschleunigern, wie beispielsweise Sulfenamid-basierten Beschleunigern, eingesetzt.

Beschleuniger werden in der Regel in Verfahren zur Herstellung von Kautschukmischungen in der letzten Mischstufe zusammen mit Schwefel zugegeben, wie in EP2858831 B1 beschrieben. Hier wird die Herstellung und Vulkanisation von Kautschukmischungen offenbart, die neben Kautschuk Silika, Silan und Schwefel den Guanidin-Beschleuniger Diphenylguanidin (DPG) enthalten.

DPG kann über die reine Funktion als Beschleuniger hinaus auch noch weitere Aufgaben erfüllen. In Mischungen, bei denen Silika als Füllstoff eingesetzt wird, das durch den Einsatz von Silanen weiter verstärkt wird, beschleunigt es die Reaktion zwischen Silan und Silika, verbessert die Füllstoffdispersion, verhindert das stetige Ansteigen der Rheometerkurve (Marching Modulus), durch das unerwünschter Weise kein Vulkanisationsplateau erreicht werden kann, und verbessert die Scorch-Eigenschaften der Mischung. In diesen Anwendungen wird DPG zusammen mit Silika und Silan in der ersten Mischstufe in dem Verfahren zur Herstellung von Kautschukmischungen eingesetzt, wie zum Beispiel in US2005/0016651A1 beschrieben.

Diese Eigenschaften sind wichtig, da durch eine beschleunigte Reaktion zwischen Silika und Silan sowie eine verbesserte Füllstoffdispersion die Mischzeit im Innenmischer reduziert werden kann und damit Mischkapazität erzeugt wird. Außerdem führt eine verbesserte Dispersion des Füllstoffs zu einer Verbesserung des Zielkonfliktes Rollwiderstand/ Nassbremsen, also einem niedrigen Rollwiderstand einerseits und guten Nassbremseigenschaften andererseits, sowie zu einer Verbesserung der Abriebeigenschaften der vulkanisierten Mischung. Gute Scorch-Eigenschaften der Mischung sind wichtig, damit die Mischung in der Produktion (Mischen und Extrusion) keine anvulkanisierten Stellen bildet, die eine erhöhte Viskosität aufweisen und die im geheizten Endprodukt zu Fehlstellen führen würden.

Eine große Herausforderung in der Entwicklung von Reifengummimischungen ist die Verbesserung des Zielkonfliktes zwischen Rollwiderstand, Nassbremsen und Abrieb. Als Indikator für den Rollwiderstand wird der Verlustfaktor tan delta bei 60 °C, bevorzugt bei einer Messfrequenz von 10 Hz, herangezogen. Als Indikator für Nassbremsen gilt der tan delta bei 0 °C, bevorzugt bei einer Messfrequenz von 10 Hz, und als Indikator für die Abriebbeständigkeit wird der DIN Abrieb betrachtet. Als Indikator für die Güte der Füllstoffdispersion dient der Payne Effekt.

In WO2010136345A1 wurden funktionalisierte Kautschuke zusammen mit einer Trimethylolpropan-Fettsäure-Mischung in Kautschukmischungen eingesetzt, um den Rollwiderstand und die Nassrutschfestigkeit zu verbessern. Allerdings enthielten die Kautschukmischungen DPG als Vulkanisationsbeschleuniger.

Es ist dem Fachmann bekannt, dass Guanidin-Beschleuniger unter Vulkanisationsbedingungen volatile organische Aminverbindungen freisetzen. Beispielsweise spaltet der in der Praxis meistverbreitete Beschleuniger, das DPG, bei der Vulkanisation Anilin ab. Mit dem Bestreben, die Emission dieser organischen Amine, insbesondere Anilin zu vermeiden, besteht Bedarf an neuen Beschleunigern.

Polyethylenimin als DPG-Ersatz ist in EP3186307B1 beschrieben, jedoch wird es darin nur in der letzten Mischstufe zugegeben.

In JP6655949B2 ist der Einsatz von Polyethylenimin in der ersten Mischstufe im Verfahren zur Herstellung von SBR/NR- und SBR/BR-haltigen Kautschukmischungen mit Silika als Füllstoff und Si69^{®} als Silan offenbart. Allerdings wird hier ein Verlust der Abriebbeständigkeit der erhaltenen Vulkanisate beobachtet.

Der vorliegenden Erfindung liegt die Aufgabe zugrunde, toxikologisch weniger bedenkliche und bei der Vulkanisation keine volatilen organischen Amine freisetzende Kautschukmischungen bereitzustellen, bei denen die anwendungsrelevanten Eigenschaften, bevorzugt die Mooney Viskosität, das Mooney Scorch Verhalten, die Dispergierbarkeit des Füllstoffs, weiter bevorzugt das Nassbremsen, der Rollwiderstand und die Abriebbeständigkeit, gleich gut, bevorzugt besser, als bei den entsprechenden Guanidin-haltigen Kautschukmischungen bzw. Vulkanisaten sind. Bevorzugt sind auch weitere anwendungstechnische Eigenschaften wie Zugfestigkeit und Bruchdehnung gleich gut, bevorzugt besser, als bei den entsprechenden Guanidin-haltigen Kautschukmischungen bzw. Vulkanisaten.

Überraschend wurde nun gefunden, dass bei Verwendung von Polyethylenimin zusammen mit mindestens einem Prozesshilfsmittel enthaltend mindestens eine Fettsäure in Kautschukmischungen enthaltend je mindestens einen Kautschuk, mindestens einen hydroxylgruppenhaltigen oxidischen Füllstoff, mindestens ein Verstärkungsadditiv aus der Reihe der schwefelhaltigen organischen Silane und mindestens einen Vernetzer aus der Reihe Schwefel und Schwefelspender Kautschukmischungen erhältlich sind, welche diese Aufgabe gegenüber den Guanidin-, insbesondere DPG-, -haltigen Äquivalenten lösen.

Die vorliegende Erfindung betrifft demnach Kautschukmischungen enthaltend
- mindestens einen Kautschuk,
- mindestens einen hydroxylgruppenhaltigen oxidischen Füllstoff,
- mindestens ein Verstärkungsadditiv aus der Reihe der schwefelhaltigen organischen Silane,
- mindestens einen Vernetzer aus der Reihe Schwefel und Schwefelspender,
- mindestens einen Vulkanisationsbeschleuniger, der Polyethylenimin enthält, und
- mindestens ein Prozesshilfsmittel, enthaltend mindestens eine Fettsäure,
wobei der Gesamtgehalt an Diphenylguanidin (DPG), Di-ortho-tolyl-guanidin (DOTG) und 1-(ortho-Tolyl)biguanid in der Kautschukmischung maximal 0,4 phr, bevorzugt maximal 0,2 phr, besonders bevorzugt maximal 0,1 phr und ganz besonders bevorzugt maximal 0,01 phr beträgt.

### Kautschuk

Die erfindungsgemäßen Kautschukmischungen enthalten mindestens einen Kautschuk. Dieser kann beispielsweise Naturkautschuk (NR) und/oder ein Synthesekautschuk sein.

Bevorzugte polare und unpolare Synthesekautschuke sind
- BR -: Polybutadien
- ABR -: Butadien/Acrylsäure-C1-C4-alkylester-Copolymerisat
- CR -: Polychloropren
- IR -: Polyisopren
- SBR -: Styrol/Butadien-Copolymerisate mit Styrolgehalten von 1 - 60, vorzugsweise 20-50 Gew-%
- IIR -: Isobutylen/Isopren-Copolymerisate
- NBR -: Butadien/Acrylnitril-Copolymerisate mit Acrylnitrilgehalten von 5-60, vorzugsweise 10-50 Gew.-%
- HNBR -: teilhydrierter oder vollständig hydrierter NBR-Kautschuk
- EPDM -: Ethylen/Propylen/Dien-Copolymerisate
- SIBR -: Styrol-Isopren-Butadien Kautschuk
- ENR -: Epoxidierter Naturkautschuk
- SNBR -: Arcylnitril-Styrol/Butadien Kautschuk
- HNBR -: Hydrierter Arcylnitril/Butadien Kautschuk
- XNBR -: Carboxylisierter Arcylnitril/Butadien Kautschuk
- HXNBR -: Hydrierter carboxylisierter Arcylnitril/Butadien Kautschuk

Der mindestens eine Synthesekautschuk kann unfunktionalisiert sein oder funktionalisiert sein.

Die erfindungsgemäßen Kautschukmischungen können mindestens einen funktionalisierten Synthesekautschuk enthalten. Es gelten dafür die oben genannten Ausführungen für die unfunktionalisierten Synthesekautschuke mit dem Unterschied, dass diese bei funktionalisierten Synthesekautschuken funktionalisiert vorliegen.

Unter funktionalisiertem Synthesekautschuk ist im Rahmen der vorliegenden Erfindung ein Synthesekautschuk zu verstehen, der an der Hauptkette und/oder an den Endgruppen durch eine oder mehrere funktionelle Gruppen, bevorzugt ausgewählt aus Carboxylgruppen, Mercaptan-Gruppen, Alkoxysilan-Gruppen, Siloxan-Gruppen, Hydroxy-Gruppen, Ethoxy-Gruppen, EpoxyGruppen, Amino-Gruppen Phthalocyanin-Gruppen, Silan-Sulfid-Gruppen und Metallatomenthaltenden Gruppen, substituiert ist, besonders bevorzugt ausgewählt aus Mercaptan-Gruppen, Alkoxysilan-Gruppen und Hydroxy-Gruppen, ganz besonders bevorzugt ausgewählt aus Mercaptan-Gruppen und Alkoxysilan-Gruppen.

Unfunktionalisierte Synthesekautschuke im Rahmen der vorliegenden Erfindung enthalten die vorgenannten Substitutionen durch funktionelle Gruppen nicht.

Die erfindungsgemäßen Kautschukmischungen enthalten bevorzugt mindestens einen funktionalisierten Synthesekautschuk, besonders bevorzugt ausgewählt aus der Gruppe bestehend aus polaren und unpolaren funktionalisierten Synthesekautschuken.

Bevorzugt ist der mindestens eine funktionalisierte Synthesekautschuk ausgewählt aus der Gruppe bestehend aus funktionalisiertem SBR-, funktionalisiertem BR- und funktionalisiertem IR-Kautschuk, besonders bevorzugt aus funktionalisiertem SBR- und funktionalisiertem BR-Kautschuk.

Bevorzugt enthalten die erfindungsgemäßen Kautschukmischungen mindestens einen funktionalisierten SBR-Kautschuk und/oder einen funktionalisierten BR-Kautschuk, besonders bevorzugt mindestens einen funktionalisierten SBR- und mindestens einen funktionalisierten BR-Kautschuk.

In einer bevorzugten Ausführungsform ist der mindestens eine Kautschuk ausgewählt aus der Gruppe bestehend aus Naturkautschuk und Synthesekautschuken, ist bevorzugt mindestens ein funktionalisierter Synthesekautschuk, besonders bevorzugt mindestens ein funktionalisierter Synthesekautschuk ausgewählt aus der Gruppe bestehend aus funktionalisiertem SBR-, funktionalisiertem BR- und funktionalisiertem IR-Kautschuk, ganz besonders bevorzugt aus funktionalisiertem SBR- und funktionalisiertem BR-Kautschuk.

Bevorzugt ist der mindestens eine funktionalisierte SBR-Kautschuk an der Hauptkette und/oder an den Endgruppen durch eine oder mehrere funktionelle Gruppen, insbesondere ausgewählt aus Mercaptan-Gruppen, Alkoxysilan-Gruppen und Hydroxy-Gruppen, substituiert, besonders bevorzugt durch mehrere funktionelle Gruppen, die Mercaptan-Gruppen und Alkoxysilan-Gruppen sind. Bevorzugt ist der mindestens eine funktionalisierte SBR-Kautschuk SPRINTAN^{®} SLR 3402 der Fa. Trinseo.

Bei dem funktionalisierten SBR-Kautschuk kann es sich um lösungspolymerisierten Styrol-Butadien-Kautschuk (SSBR) oder um emulsionspolymerisierten Styrol-Butadien-Kautschuk (ESBR) handeln, wobei auch ein Gemisch aus mindestens einem funktionalisierten SSBR und mindestens einem funktionalisierten ESBR eingesetzt werden kann.

Das Molgewicht (Mw) der Styrol-Butadien-Copolymere kann über einen weiten Bereich variieren. Bevorzugt sind Styrol-Butadien-Copolymere mit einem Mw von 250000 bis 600000 g/mol, besonders bevorzugt mit einem Mw von 350000 bis 500000 g/mol.

Bevorzugt ist der mindestens eine funktionalisierte BR-Kautschuk an der Hauptkette und/oder an den Endgruppen durch eine oder mehrere funktionelle Gruppen, ausgewählt aus Mercaptan-Gruppen, Alkoxysilan-Gruppen und Hydroxy-Gruppen, substituiert, besonders bevorzugt durch Alkoxysilan-Gruppen. Bevorzugt ist der mindestens eine funktionalisierte BR-Kautschuk NIPOL^{®} BR 1261 der Fa. Zeon.

Das Molgewicht der Butadien-Polymere kann über einen weiten Bereich variieren. Bevorzugt sind Butadien-Polymere mit einem Mw von 250000 bis 5000000 g/mol.

Polybutadien mit einem cis-Anteil größer oder gleich 90 Gew.-% wird als high-cis-Typ und Polybutadien mit einem cis-Anteil kleiner als 90 Gew.-% wird als low-cis-Typ bezeichnet. Ein low-cis-Polybutadien ist z.B. Li-BR (Lithium-katalysierter Butadien-Kautschuk) mit einem cis-Anteil von 20 bis 50 Gew.-%. Bevorzugt im Rahmen der vorliegenden Erfindung ist ein high-cis-Typ funktionalisierter BR-Kautschuk.

Die erfindungsgemäßen Kautschukmischungen enthalten bevorzugt 0 bis 100 phr mindestens eines funktionalisierten Synthesekautschuks, besonders bevorzugt 50 bis 100 phr, ganz besonders bevorzugt 70-100 phr.

Die erfindungsgemäßen Kautschukmischungen enthalten bevorzugt mindestens einen funktionalisierten SBR- und mindestens einen funktionalisierten BR-Kautschuk im Gewichtsverhältnis SBR:BR von 100:0 bis 0:100, besonders bevorzugt von 90:10 bis 10:90, ganz besonders bevorzugt von 90:10 bis 30:70, ganz ganz besonders bevorzugt von 80:20 bis 50:50.

Die erfindungsgemäßen Kautschukmischungen enthalten bevorzugt 0 bis 100 phr mindestens eines unfunktionalisierten Synthesekautschuks und/oder mindestens eines Naturkautschuks, besonders bevorzugt 0 bis 50 phr, ganz besonders bevorzugt 0 bis 30 phr.

### Füllstoffe

Der mindestens eine hydroxylgruppenhaltige oxidische Füllstoff ist bevorzugt ausgewählt aus der Gruppe bestehend aus Kieselsäuren, synthetischen Silikaten und natürlichen Silikaten.

Der Gehalt an hydroxylgruppenhaltigen oxidischen Füllstoffen in den erfindungsgemäßen Kautschukmischungen beträgt bevorzugt 0,1 bis 250 phr, besonders bevorzugt 20 bis 200 phr, ganz besonders bevorzugt 25 bis 180 phr und meist bevorzugt 30 bis 160 phr.

Als hydroxylgruppenhaltige oxidische Füllstoffe eignen sich bevorzugt solche aus der Reihe der
- Kieselsäuren, insbesondere mit einer spezifischen Oberfläche (BET) von 5 bis 1000, vorzugsweise 20 bis 400 m²/g, vorzugsweise mit Primärteilchengrößen von 100 bis 400 nm, wobei die Kieselsäuren gegebenenfalls auch als Mischoxide mit anderen Metalloxiden, wie Al-, Mg-, Ca-, Ba-, Zr-, Ti-oxiden vorliegen,
- synthetischen Silikate, wie Aluminiumsilikat, Erdalkalisilikate wie Magnesiumsilikat oder Calciumsilikat, mit spezifischen Oberflächen (BET) von 20 bis 400 m²/g, vorzugsweise mit Primärteilchengrößen von 10 bis 400 nm
   und
- natürlichen Silikate, wie Kaolin und andere natürliche vorkommende Kieselsäuren, sowie Mischungen davon.

Die oben genannten BET Oberflächen werden gemäß DIN ISO 9277 bestimmt. Die Größenangaben der Primärteilchengrößen basieren auf Messungen mit einem Prüfgerät zur Partikelanalyse mittels Streulicht. Die Berechnung der Partikelgröße basiert dabei auf der Mie-Theorie, welche die Wechselwirkung zwischen Licht und Materie beschreibt (DIN/ISO 13320).

Bevorzugt sind die Kieselsäuren durch Fällung von Lösungen von Silikaten oder Flammenhydrolyse von Siliciumhalogeniden erhältlich.

Bevorzugt enthalten die erfindungsgemäßen Kautschukmischungen mindestens einen hydroxylgruppenhaltigen oxidischen Füllstoff aus der Reihe der Kieselsäuren, insbesondere mit einer spezifischen Oberfläche (BET) im Bereich von 5 bis 1000, bevorzugt 20 bis 400 m²/g in einer Menge von 0,1 bis 250 phr, bevorzugt 20 bis 200 phr , besonders bevorzugt von 25 bis 180 phr, ganz besonders bevorzugt 30 bis 160 phr.

Die erfindungsgemäßen Kautschukmischungen können als Füllstoff mindestens einen Ruß enthalten.

In einer bevorzugten Ausführungsform enthalten die erfindungsgemäßen Kautschukmischungen als Füllstoff mindestens einen Ruß.

Bevorzugt enthalten die erfindungsgemäßen Kautschukmischungen mindestens einen Ruß in einer Menge von 0,1 bis 120 phr, besonders bevorzugt 0,1 bis 100 phr, ganz besonders bevorzugt 1 bis 70 phr, meist bevorzugt 2 bis 40 phr.

Bevorzugt sind Ruße, die nach dem Flammruß-, Furnace- oder Gasrußverfahren erhältlich sind und die eine spezifische Oberfläche (BET) im Bereich von 20 bis 200 m²/g besitzen, wie z.B. SAF-, ISAF-, IISAF-, HAF-, FEF- oder GPF-Ruße. Bevorzugt enthalten die erfindungsgemäßen Kautschukmischungen mindestens einen Ruß mit einer spezifische Oberfläche (BET) im Bereich von 20 bis 200 m²/g .

Besonders bevorzugt enthalten die erfindungsgemäßen Kautschukmischungen als Füllstoffe mindestens eine der oben genannten Kieselsäuren und mindestens einen der oben genannten Ruße. Ganz besonders bevorzugt enthalten die erfindungsgemäßen Kautschukmischungen als Füllstoffe 25 bis 180 phr, bevorzugt 30 bis 160 phr, mindestens eine der oben genannten Kieselsäuren und 1,0 bis 70 phr, bevorzugt 2,0 bis 40 phr, mindestens einen der oben genannten Ruße.

Die Gesamtmenge an Ruß und kieselsäurebasierenden Füllstoffen in der erfindungsgemäßen Kautschukmischung beträgt bevorzugt 26 bis 250 phr, besonders bevorzugt 32 bis 200 phr.

### Vernetzer und Vulkanisationsbeschleuniger

Die erfindungsgemäßen Kautschukmischungen enthalten mindestens einen Vernetzer aus der Reihe Schwefel und Schwefelspender und mindestens einen Vulkanisationsbeschleuniger, der Polyethylenimin enthält.

### Vernetzer

Die erfindungsgemäßen Kautschukmischungen enthalten mindestens einen Vernetzer aus der Reihe Schwefel und Schwefelspender.

Schwefel kann in elementarer löslicher oder unlöslicher Form eingesetzt werden. Besonders bevorzugt enthalten die erfindungsgemäßen Kautschukmischungen mindestens einen Schwefelspender und/oder Schwefel, ganz besonders bevorzugt Schwefel.

Als Schwefelspender kommen beispielsweise Dimorpholyldisulfid (DTDM), 2-Morpholinodithiobenzothiazol (MBSS), Caprolactamdisulfid, Dipentamethylen-thiuramtetrasulfid (DPTT), Tetramethylthiuramdisulfid (TMTD) und Tetrabenzyl-thiuramdisulfid (TBzTD) in Frage.

Die erfindungsgemäßen Kautschukmischungen enthalten im Allgemeinen 0,1 bis 20 phr, bevorzugt 0,5 bis 10 phr, besonders bevorzugt von 1,0 bis 8 phr und meist bevorzugt 1 bis 4 phr des mindestens einen Vernetzers aus der Reihe Schwefel und Schwefelspender.

Zinkoxid kann in den erfindungsgemäßen Kautschukmischungen zugegen sein.

Bevorzugte erfindungsgemäße Kautschukmischungen enthalten Zinkoxid mit einer BET-Oberfläche von 2 bis 100 m²/g, bevorzugt 2 bis 70 m²/g. BET-Oberflächen von Zinkoxid können gemäß DIN ISO 9277 gemessen werden.

Im Allgemeinen ist Zinkoxid in einer Menge von 0 bis 20 phr, bevorzugt von 0,1 bis 10 phr, besonders bevorzugt von 1 bis 5 phr in den erfindungsgemäßen Kautschukmischungen enthalten.

### Vulkanisationsbeschleuniger

Die erfindungsgemäßen Kautschukmischungen enthalten mindestens einen Vulkanisationsbeschleuniger, der Polyethylenimin enthält.

Der Ausdruck Polyethylenimin (PEI) ist im Kontext der vorliegenden Erfindung als Homopolymer des Ethylenimins bzw. Copolymer(e) von Ethylenimin und einem oder mehreren Comonomeren zu verstehen, wobei bei den Copolymeren der Anteil der von Ethylenimin abstammenden Wiederholungeinheiten jeweils bezogen auf die Gesamtmasse des Polymers mindestens 50 Gew.-%, bevorzugt mindestens 80 Gew.-%, weiter bevorzugt mindestens 90 Gew.-%, besonders bevorzugt mindestens 95 Gew.-%, und ganz besonders bevorzugt mindestens 98 Gew.-% beträgt. Der Ausdruck Polyethylenimin umfasst dabei auch Mischungen von Homo- und/oder Copolymeren des Ethylenimins beispielsweise mit verschiedenen Molekulargewichten, Verzweigungsgraden, Comonomeren usw.

Typischerweise haben solche Homo- oder Copolymere ein gewichtsgemitteltes Molekulargewicht Mw größer 200, bevorzugt von 300 bis 3.000.000, besonders bevorzugt von 400 bis 800.000, ganz besonders bevorzugt von 500 bis 100.000, weiter bevorzugt von 600 bis 30.000 und meist bevorzugt von 700 bis 7.000.

Das in den erfindungsgemäßen Kautschukmischungen eingesetzte Polyethylenimin kann eine lineare oder verzweigte Struktur aufweisen, auch Mischungen von linearem und verzweigtem Polyethylenimin sind verwendbar.

In einer bevorzugten Ausführungsform wird Polyethylenimin mit verzweigter Struktur, welches sowohl primäre als auch sekundäre und tertiäre Aminogruppen aufweisen, eingesetzt.

Die erfindungsgemäße Mischung kann weiterhin mindestens einen Träger enthalten, der geeignet ist, um das Polyethylenimin darauf aufziehen und/oder daran adsorbieren zu können.

Vorteil von Träger-gebundenem Polyethylenimin sind eine verbesserte Dosierbarkeit und/oder Dispergierbarkeit. Allgemein werden solche Träger-gebundenen Verbindungen auch als "dry liquid" bezeichnet.

Der mindestens eine Träger kann inert, organisch oder anorganisch sein.

Geeignete Träger können beispielsweise helle anorganische Füllstoffe, wie z.B. Glimmer, Kaolin, Kieselerde, Kieselsäure, Kreide, Talkum sein.

Die erfindungsgemäße Mischung kann diesen mindestens einen Träger enthalten oder nicht enthalten.

Das Polyethylenimin kann in der erfindungsgemäßen Mischung an den mindestens einen Träger aufgezogen und/oder daran adsorbiert sein oder nicht auf den mindestens einen Träger aufgezogen und/oder daran adsorbiert vorliegen.

Bevorzugt ist der mindestens eine Träger ausgewählt aus der Gruppe bestehend aus natürlichen und synthetischen Silikaten, insbesondere ausgewählt aus der Gruppe bestehend aus neutralen, aciden und basischen Silika, Aluminiumoxid, Zinkoxid und Mischungen der vorgenannten. Besonders bevorzugt ist der mindestens eine Träger ausgewählt aus der Gruppe bestehend aus neutralen, aciden und basischen Silika.

In einer bevorzugten Ausführungsform enthält die erfindungsgemäße Mischung mindestens einen Träger, ausgewählt aus der Gruppe bestehend aus neutralen, aciden und basischen Silika, auf den das Polyethylenimin aufgezogen und/oder daran adsorbiert ist.

Das Gew.-%-Verhältnis von Träger, insbesondere Silika, zu dem Polyethylenimin kann über einen weiteren Bereich variieren.

Bevorzugt beträgt das Gew.-%-Verhältnis von Träger, insbesondere Silika, zu dem Polyethylenimin 90:10 - 10:90, besonders bevorzugt 90:10 - 10:60, ganz besonders bevorzugt 15:10 - 10:15.

In der vorliegenden Erfindung verwendbare Ethylendiamin-Ethylenimin-Copolymere bzw. Polyethylenimin Homopolymere sind beispielsweise diejenigen gemäß CAS-Nummern 25987-06-8 und 9002-98-6, bevorzugt gemäß CAS-Nummer 25987-06-8.

Besonders bevorzugt ist das Polyethylenimin auf den Silika aufgezogen und/oder daran absorbiert. Meist bevorzugt ist das Polyethylenimin Rhenocure^{®} DR/S der Fa. LANXESS.

Erfindungsgemäße Kautschukmischungen enthalten bevorzugt 0,01 bis 10 phr, besonders bevorzugt 0,1 bis 5 phr und ganz besonders bevorzugt 0,2 bis 2,5 phr des Vulkanisationsbeschleunigers Polyethylenimin.

Darüber hinaus können die erfindungsgemäßen Kautschukmischungen neben Polyethylenimin einen oder mehrere weitere Vulkanisationsbeschleuniger enthalten oder nicht enthalten.

Bevorzugt ist der mindestens eine weitere Vulkanisationsbeschleuniger ausgewählt aus der Gruppe der Mercapto-benzthiazole, Thiocarbamate, Dithiocarbamate, Thiurame, Thiazole, Sulfenamide, Thiazolsulfenamide, Xanthogenate, bi- oder polycyclische Amine, Thiophosphate, Dithiophosphate, Caprolactame, Thioharnstoffderivate, Guanidine, cyclischen Disulfane sowie Amine, insbesondere Zink-diamindiisocyanat, Hexamethylentetramin, 1,3-Bis(citraconimidomethyl)-benzol und ganz besonders bevorzugt aus der Gruppe der Sulfenamide, ganz ganz besonders bevorzugt N-Cyclohexylbenzothiazolsulfenamid (CAS-Nr.: 95-33-0), wobei der Gesamtgehalt der an Diphenylguanidin (DPG), Di-ortho-tolyl-guanidin (DOTG) und 1-(ortho-Tolyl)biguanid in der Kautschukmischung maximal 0,4 phr, bevorzugt maximal 0,2 phr, besonders bevorzugt maximal 0,1 phr und ganz besonders bevorzugt maximal 0,01 phr beträgt.

Die erfindungsgemäßen Kautschukmischungen enthalten im Allgemeinen 0,01 bis 20 phr, bevorzugt 0,1 bis 10 phr und besonders bevorzugt 0,2 bis 5 phr an mindestens einem der genannten Vulkanisationsbeschleuniger, der Polyethylenimin enthält.

Bevorzugt enthalten die erfindungsgemäßen Kautschukmischungen mindestens einen Vulkanisationsbeschleuniger, der Polyethylenimin und N-Cyclohexylbenzothiazolsulfenamid enthält.

Die Gesamtmenge an Vernetzer und Vulkanisationsbeschleuniger in den Kautschukmischungen beträgt bevorzugt 0,51 bis 20 phr, besonders bevorzugt von 1,1 bis 18 phr, meist bevorzugt 1,2 bis 9 phr.

In der erfindungsgemäßen Mischung können Guanidin-haltige Verbindungen in einer geringen Menge enthalten oder gar nicht enthalten sein.

Im Sinne der vorliegenden Erfindung beträgt der Gesamtgehalt an Diphenylguanidin (DPG), Di-ortho-tolyl-guanidin (DOTG) und 1-(ortho-Tolyl)biguanid in der erfindungsgemäßen Kautschukmischung bevorzugt maximal 0,4 phr, besonders bevorzugt maximal 0,2 phr, ganz besonders bevorzugt maximal 0,1 phr und meist bevorzugt maximal 0,01 phr.

Weiter bevorzugt beträgt der Gesamtgehalt an Diphenylguanidin (DPG), substituierte Diphenylguanidine, andere organische Guanidin-Derivate, bei denen die Guanidinfunktion mit ein oder mehreren C₁-C₈ Alkylgruppen, C₂-C₈ Alkenylgruppen, C₆-C₈ Arylgruppen, C₇-C₁₀ Aralkylgruppen und/oder C₁-C₈ Heteroalkylgruppen substituiert ist, und 1-(ortho-Tolyl)biguanid in der erfindungsgemäßen Mischung maximal 0,4 phr, besonders bevorzugt maximal 0,2 phr, ganz besonders bevorzugt maximal 0,1 phr und meist bevorzugt maximal 0,01 phr.

Meist bevorzugt beträgt der Gesamtgehalt an Guanidin-haltigen Verbindungen in der erfindungsgemäßen Mischung maximal 0,4 phr, bevorzugt maximal 0,2 phr, besonders bevorzugt maximal 0,1 phr und ganz besonders bevorzugt maximal 0,01 phr.

Unter dem Begriff substituierte Diphenylguanidine sind im Sinne der vorliegenden Erfindung bevorzugt solche Diphenylguanidine zu verstehen, bei denen mindestens ein Phenyl-Ring substituiert ist, bevorzugt beide Phenyl-Ringe substituiert sind. Als Substituenten sind verschiedenste Substituenten möglich. Bevorzugt ist ein Substituent eines Phenyl-Rings ausgewählt aus der Gruppe bestehend aus C₁-C₂₀-Alkyl, das substituiert oder unsubstituiert ist, C₂-C₂₀-Alkenyl, das substituiert oder unsubstituiert ist und eine oder mehrere Doppelbindungen enthält, C₂-C₂₀-Alkinyl, das substituiert oder unsubstituiert ist und eine oder mehrere Dreifachbindungen enthält, C₃-C₂₀-Aryl, das substituiert oder unsubstituiert ist, Heteroaryl, das substituiert oder unsubstituiert ist, fünf- bis zwanzig-gliedrig ist und ein oder mehrere Heteroatome enthält, C₃-C₁₄-Cycloalkyl, das substituiert oder unsubstituiert ist, Heterocycloalkyl, das substituiert oder unsubstituiert ist, drei- bis acht-gliedrig ist und ein oder mehrere Heteroatome enthält, und Heteroatomen.

### Prozesshilfsmittel

Die erfindungsgemäßen Kautschukmischungen enthalten mindestens ein Prozesshilfsmittel, enthaltend mindestens eine Fettsäure.

Die mindestens eine Fettsäure ist bevorzugt ausgewählt aus
- Fettsäuren CₙH₂ₙO₂ mit n = 10 - 30, besonders bevorzugt aus CₙH₂ₙO₂ mit n = 12 - 22, ganz besonders bevorzugt aus CₙH₂ₙO₂ mit n = 10, 12, 14, 16 und 18, meist bevorzugt aus CₙH₂ₙO₂ mit n = 16 oder n = 18, und
- Fettsäuren CₙH₂ₙ₋ₓO₂ mit x = eine gerade Zahl größer gleich 2 und kleiner gleich 10 und n = 10 - 30, besonders bevorzugt aus CₙH₂ₙ₋ₓO₂ mit x= eine gerade Zahl größer gleich 2 und kleiner gleich 10 und n = 12 - 22, ganz besonders bevorzugt aus CₙH₂ₙ₋ₓO₂ mit x= eine gerade Zahl, die 2 oder 4 ist, und n = 16 oder n= 18, meist bevorzugt aus CₙH₂ₙ₋ₓO₂ mit x=2 und n = 16 oder 18, oder CₙH₂ₙ₋ₓO₂ mit x=4 und n = 18.

Bevorzugt ist die mindestens eine Fettsäure in einer Menge von 40 - 85 Gew.-% in dem mindestens einen Prozesshilfsmittel enthalten, besonders bevorzugt 55 - 80 Gew.-%, wobei die Gew.-% bezogen sind auf die Gesamtmenge des mindestens einen Prozesshilfsmittels.

Von den zuvor genannten Mengen der mindestens einen Fettsäure sind bevorzugt mindestens 80 Gew.-%, besonders bevorzugt mindestens 90 Gew.-%, ganz besonders bevorzugt mindestens 95 Gew.-%, bezogen auf die Gesamtmenge der mindestens einen Fettsäure, zurückzuführen auf mindestens eine Fettsäure ausgewählt aus Fettsäuren CₙH₂ₙO₂ mit n = 10 - 30, besonders bevorzugt aus CₙH₂ₙO₂ mit n = 12 - 22, ganz besonders bevorzugt aus CₙH₂ₙO₂ mit n = 10, 12, 14, 16 und 18, meist bevorzugt aus CₙH₂ₙO₂ mit n = 16 oder n = 18.

Bevorzugte erfindungsgemäße Kautschukmischungen enthalten mindestens ein Prozesshilfsmittel, enthaltend neben der mindestens einen Fettsäure weiter mindestens einen Alkohol, bevorzugt ausgewählt aus CₙH₂ₙO mit n = 10 - 26 und 1,1,1-Trimethylolpropan (TMP), besonders bevorzugt aus CₙH₂ₙO mit n = 10 - 24 und 1,1,1-Trimethylolpropan, ganz besonders bevorzugt aus CₙH₂ₙO mit n = 10, 12, 14, 16, 18, 20, 22, 24 und 1,1,1-Trimethylolpropan, meist bevorzugt aus CₙH₂ₙO mit n = 18 und 1,1,1-Trimethylolpropan.

Bevorzugt ist der mindestens eine Alkohol in einer Menge von 5-50 Gew.-% in dem mindestens einen Prozesshilfsmittel enthalten, besonders bevorzugt 8 - 25 Gew.-%, , wobei die Gew.-% bezogen sind auf die Gesamtmenge des mindestens einen Prozesshilfsmittels.

Bevorzugte erfindungsgemäße Kautschukmischungen enthalten mindestens ein Prozesshilfsmittel, enthaltend neben der mindestens einen Fettsäure und dem gegebenenfalls mindestens einen Alkohol weiter mindestens einen Ester, bevorzugt ausgewählt aus Dodecansäurestearylester, Myristinsäurestearylester, Palmitinsäurestearylester, Palmitinsäuredocosylester, Stearinsäurestearylester, Stearinsäureeicosylester, Stearinsäuretetradecylester, Stearinsäuredocosylester und Arachinsäuredocosylester, besonders bevorzugt ausgewählt aus Dodecansäurestearylester, Myristinsäurestearylester, Palmitinsäurestearylester, Palmitinsäuredocosylester, Stearinsäurestearylester, meist bevorzugt ausgewählt aus Palmitinsäurestearylester und Stearinsäurestearylester.

Bevorzugt ist der mindestens eine Ester in einer Menge von 5 - 20 Gew.-% in dem mindestens einen Prozesshilfsmittel enthalten, besonders bevorzugt 8 - 15 Gew.-%, , wobei die Gew.-% bezogen sind auf die Gesamtmenge des mindestens einen Prozesshilfsmittels.

Bevorzugte erfindungsgemäße Kautschukmischungen enthalten mindestens ein Prozesshilfsmittel, enthaltend neben der mindestens einen Fettsäure und dem gegebenenfalls mindestens einen Alkohol und dem gegebenenfalls mindestens einen Ester Polyethylenglykol, bevorzugt mit einem Molgewicht von 3000 - 10000 g/mol, besonders bevorzugt von 5000 - 7000 g/mol, meist bevorzugt 6000 g/mol.

Bevorzugt ist Polyethylenglykol in einer Menge von 1 - 10 Gew.-% in dem mindestens einen Prozesshilfsmittel enthalten, besonders bevorzugt 1 - 5 Gew.-%, wobei die Gew.-% bezogen sind auf die Gesamtmenge des mindestens einen Prozesshilfsmittels.

Neben den oben genannten Verbindungen können in dem mindestens Prozesshilfsmittel weitere Zusatzstoffe enthalten sein, wie beispielsweise Polyethylen LDPE, Natriumhydroxid und Butylhydroxytoluol, bevorzugt in einer Menge von 4 - 8 Gew.-%, wobei die Gew.-% bezogen sind auf die Gesamtmenge des mindestens einen Prozesshilfsmittels.

Das mindestens eine Prozesshilfsmittel ist in den erfindungsgemäßen Kautschukmischungen bevorzugt in einer Menge von 0,1 - 30 phr enthalten, besonders bevorzugt von 0,5 - 25 phr, ganz besonders bevorzugt von 1 - 15 phr, meist bevorzugt von 5 - 15 phr.

In einer besonders bevorzugten Ausführungsform enthalten die erfindungsgemäßen Kautschukmischungen 0,1 - 30 phr, bevorzugt 0,5 - 25 phr, besonders bevorzugt 1 - 15 phr, ganz besonders bevorzugt 5 - 15 phr mindestens eines Prozesshilfsmittels, enthaltend
- mindestens eine Fettsäure, ausgewählt aus
   - Fettsäuren CₙH₂ₙO₂ mit n = 10 - 30, und
   - Fettsäuren CₙH₂ₙ₋ₓO₂ mit x = eine gerade Zahl größer gleich 2 und kleiner gleich 10 und n = 10 - 30,
- mindestens einen Alkohol, ausgewählt aus CₙH₂ₙO mit n = 10 - 26 und 1,1,1-Trimethylolpropan (TMP),
- mindestens einen Ester, ausgewählt aus Dodecansäurestearylester, Myristinsäurestearylester, Palmitinsäurestearylester, Palmitinsäuredocosylester, Stearinsäurestearylester, Stearinsäureeicosylester, Stearinsäuretetradecylester, Stearinsäuredocosylester und Arachinsäuredocosyllester, und
- Polyethylenglykol.

In einer ganz besonders bevorzugten Ausführungsform enthalten die erfindungsgemäßen Kautschukmischungen 0,1 - 30 phr mindestens eines Prozesshilfsmittels, bevorzugt 0,5 - 25 phr, besonders bevorzugt 1 - 15 phr, ganz besonders bevorzugt 5 - 15 phr, enthaltend
- 40 - 85 Gew.-%, bevorzugt 55 - 80 Gew.-%, mindestens einer Fettsäure, ausgewählt aus
   - Fettsäuren CₙH₂ₙO₂ mit n = 10 - 30, und
   - Fettsäuren CₙH₂ₙ₋ₓO₂ mit x= eine gerade Zahl größer gleich 2 und kleiner gleich 10 und n = 10 - 30, wobei mindestens 80 Gew.-%, bevorzugt mindestens 90 Gew.-%, ganz besonders bevorzugt mindestens 95 Gew.-%, bezogen auf die Gesamtmenge der mindestens einen Fettsäure, zurückzuführen ist auf mindestens eine Fettsäure ausgewählt aus Fettsäuren CₙH₂ₙO₂ mit n = 10 - 30, bevorzugt aus CₙH₂ₙO₂ mit n = 12 - 22, besonders bevorzugt aus CₙH₂ₙO₂ mit n = 10, 12, 14, 16 und 18, ganz besonders bevorzugt aus CₙH₂ₙO₂ mit n = 16 oder n = 18,
- 5-50 Gew.-%, bevorzugt 8 - 25 Gew.-%, mindestens eines Alkohols, ausgewählt aus CₙH₂ₙO mit n = 10-26 und 1,1,1-Trimethylolpropan (TMP),
- 5-20 Gew.-%, bevorzugt 8-15 Gew.-% mindestens eines Esters, ausgewählt aus Dodecansäurestearylester, Myristinsäurestearylester, Palmitinsäurestearylester, Palmitinsäuredocosylester, Stearinsäurestearylester, Stearinsäureeicosylester, Stearinsäuretetradecylester, Stearinsäuredocosylester und Arachinsäuredocosyllester, und
- 1-10 Gew.-%, bevorzugt 1-5 Gew.-% Polyethylenglykol,
wobei die Gew.-% bezogen sind auf die Gesamtmenge des mindestens einen Prozesshilfsmittels.

### Verstärkungsadditive

Die erfindungsgemäßen Kautschukmischungen enthalten mindestens ein Verstärkungsadditiv aus der Reihe der schwefelhaltigen organischen Silane.

Bevorzugte schwefelhaltige organische Silane sind bifunktionelle schwefelhaltige organische Silane, die am Siliciumatom mindestens eine Alkoxy-, Cycloalkoxy-, oder Phenoxygruppe aufweisen und als andere Funktionalität eine Gruppe ausgewählt aus -SCN, -SH oder -Sx- mit x = 2 bis 8.

Besonders bevorzugt sind Alkoxysilylgruppen-haltige schwefelhaltige Silane und ganz besonders bevorzugt Trialkoxysilylgruppen-haltige schwefelhaltige organische Silane.

Meist bevorzugt enthalten die erfindungsgemäßen Kautschukmischungen ein oder mehrere schwefelhaltige Silane aus der Reihe Bis-(triethoxysilylpropyl)-tetrasulfan, Bis-(triethoxysilylpropyl - disulfan und 3-(Triethoxysilyl)-1-propanthiol.

Flüssige schwefelhaltige Silane können zur besseren Dosierbarkeit und/oder Dispergierbarkeit auf einem Träger aufgezogen werden (dry liquid). Der Gehalt an schwefelhaltigen Silanen in diesen "dry liquids" liegt bevorzugt zwischen 30 und 70 Gew.-Teilen, besonders bevorzugt zwischen 40 und 60 Gew.-Teilen je 100 Gew.-Teile dry liquid.

Die erfindungsgemäßen Kautschukmischungen enthalten im Allgemeinen 0,1 bis 20 phr, vorzugsweise 0,5 bis 15 phr und besonders bevorzugt 1,0 bis 10 phr an mindestens einem Verstärkungsadditiv aus der Reihe der schwefelhaltigen organischen Silane.

### Kautschukhilfsmittel

Die erfindungsgemäßen Kautschukmischungen können weiterhin ein oder mehrere Kautschukhilfsmittel enthalten. Als Kautschukhilfsmittel kommen beispielsweise Alterungsschutzmittel, Haftmittel, Wärmestabilisatoren, Lichtschutzmittel, Flammschutzmittel, Verarbeitungshilfsmittel, Schlagzähfestigkeitsverbesserer, Weichmacher, Tackifier, Treibmittel, Farbstoffe, Pigmente, Wachse, Streckmittel, organische Säuren wie Stearinsäure, Verzögerer, und Reversionsschutzmittel in Frage.

Die erfindungsgemäßen Kautschukmischungen können ein oder mehrere Alterungsschutzmittel enthalten. Als solche geeignet sind aminische Alterungsschutzmittel wie z. B. Diaryl-p-phenylendiaminen (DTPD), octyliertes Diphenylamin (ODPA), Phenyl-α-naphthylamin (PAN), Phenyl-β-naphthylamin (PBN), vorzugsweise solche auf Phenylen-diaminbasis, z. B. N,N'-Dicyclohexyl-p-phenylendiamin (CCPD), N-Isopropyl-N'-phenyl-p-phenylen¬diamin, N 1,3-Dimethyl-butyl-N'-phenyl-p-phenylen-diamin (6PPD), N-1,4-Dimethylpentyl-N'-phenyl-p phenylendiamin (7PPD), N,N'-bis-(1,4-Dimethylpentyl)-p-phenylendiamin (77PD) sowie Phosphite wie Tris-(nonylphenyl)phosphit, polymerisiertes 2,2,4-Trimethyl-1,2-dihydrochinolin (TMQ), Methyl-2-Mercapto-benzimidazol (MMBI) und Zinkmethylmercaptobenzimidazol (ZMMBI) sowie Mischungen davon. Besonders bevorzugt wird das mindestens eine Alterungsschutzmittel ausgewählt aus der Gruppe bestehend aus N,N'-Dicyclohexyl-p-phenylendiamin (CCPD) und N 1,3-Dimethyl-butyl-N'-phenyl-p-phenylen-diamin (6PPD).

Verarbeitungshilfsmittel sollen zwischen den Kautschuk-Partikeln wirksam werden und Reibungskräften beim Mischen, Plastifizieren und Verformen entgegenwirken. Als Verarbeitungshilfsmittel können die erfindungsgemäßen Kautschukmischungen alle für die Verarbeitung von Kunststoffen üblichen Gleitmittel enthalten, wie beispielsweise Kohlenwasserstoffe, wie Öle, z.B. aromatisches Prozessöl, Paraffine und PE-Wachse, Fettalkohole mit 6 bis 20 C- Atomen, Ketone, Carbonsäuren, wie Fettsäuren und Montansäuren, oxidiertes PE-Wachs, aromatisch modifizierte cycloaliphatische Kohlenwasserstoffharze, Metallsalze von Carbonsäuren, Carbonsäureamide sowie Carbonsäureester, beispielsweise mit den Alkoholen Ethanol, Fettalkoholen, Glycerin, Ethandiol, Pentaerythrit und langkettigen Carbonsäuren als Säurekomponente.

Um die Entflammbarkeit zu vermindern und die Rauchentwicklung beim Verbrennen zu verringern, können die erfindungsgemäße Kautschukmischungen Flammschutzmittel enthalten. Hierfür werden beispielsweise Antimontrioxid, Phosphorsäureester, Chlorparaffin, Aluminiumhydroxid, Borverbindungen, Zinkverbindungen ausgenommen ZnO, Molybdäntrioxid, Ferrocen, Calciumcarbonat oder Magnesiumcarbonat verwendet.

Vor der Vernetzung können der erfindungsgemäßen Kautschukmischungen auch weitere Kunststoffe beigefügt werden, die beispielsweise als polymere Verarbeitungshilfsmittel oder Schlagzähigkeitsverbesserer wirken. Diese Kunststoffe werden bevorzugt gewählt aus der Gruppe bestehend aus den Homo- und Copolymeren auf Basis von Ethylen, Propylen, Butadien, Styrol, Vinylacetat, Vinylchlorid, Glycidylacrylat, Glycidylmethacrylat, Acrylaten und Methacrylaten mit Alkoholkomponenten von verzweigten oder unverzweigten C1- bis C10-Alkoholen, wobei Polyacrylate mit gleichen oder verschiedenen Alkoholresten aus der Gruppe der C4- bis C8-Alkohole, insbesondere des Butanols, Hexanols, Octanols und 2-Ethylhexanols, Polymethylmethacrylat, Methylmethacrylat-Butylacrylat-Copolymere, Methylmethacrylat-Butylmethacrylat-Copolymere, Ethylen-Vinylacetat-Copolymere, chloriertes Polyethylen, Ethylen-Propylen-Copolymere, Ethylen-Propylen-Dien-Copolymere besonders bevorzugt sind.

Bekannte Haftmittel basieren auf Resorcin, Formaldehyd und Silica, die sogenannten RFS-Direkthaftsysteme. Diese Direkthaftsysteme können in beliebiger Menge der erfindungsgemäßen Kautschukmischung zu jedem Zeitpunkt des Einmischens in die erfindungsgemäßen Kautschukmischungen, eingesetzt werden.

Darüber hinaus können die erfindungsgemäßen Kautschukmischungen mindestens einen Vulkanisationsverzögerer enthalten.

Bevorzugt enthalten die erfindungsgemäßen Kautschukmischungen mindestens einen Vulkanisationsverzögerer. Als solche kommen beispielsweise Vulkanisationsverzögerer aus der Gruppe der Sulfenamid-Verzögerer basierend auf acidischen Verbindungen wie Phthalsäure, Phthalsäureanhydrid, Benzoesäure oder Salicylsäure, und der Gruppe der N-Nitroso-Verbindungen basierend auf Diphenylamin oder Trimethyldihydroquinolin, in Frage.

Besonders bevorzugt ist der mindestens eine Vulkanisationsverzögerer ausgewählt aus der Gruppe bestehend aus Sulfenamid-Verzögerern, ganz besonders bevorzugt ausgewählt aus N-Cyclohexylthiophthalimid und N-Phenyl-N-(trichlormethylsulfenyl)-benzolsulfonamid, meist bevorzugt N-Cyclohexyl-thiophthalimid.

Der mindestens eine Vulkanisationsverzögerer ist in den erfindungsgemäßen Kautschukmischungen bevorzugt in einer Menge von 0,01 - 10 phr enthalten, besonders bevorzugt von 0,05 - 5 phr, ganz besonders bevorzugt von 0,1 - 1 phr, meist bevorzugt von 0,1 - 0,5 phr.

Die in der erfindungsgemäßen Mischung enthaltenen Kautschukhilfsmittel sind bevorzugt verschieden von den sonstigen Inhaltsstoffen der erfindungsgemäßen Kautschukmischung, wie dem mindestens einen Kautschuk, dem mindestens einen hydroxylgruppenhaltigen oxidischen Füllstoff, dem mindestens einen Verstärkungsadditiv aus der Reihe der schwefelhaltigen organischen Silane, dem mindestens einen Vernetzer aus der Reihe Schwefel und Schwefelspender, dem mindestens einen Vulkanisationsbeschleuniger, der Polyethylenimin enthält, und dem mindestens einen Prozesshilfsmittel.

Die Kautschukhilfsmittel können den erfindungsgemäßen Kautschukmischungen in den für diese Hilfsmittel üblichen Mengen, die sich auch nach dem Verwendungszweck der daraus hergestellten Vulkanisate richten, zugesetzt werden. Übliche Mengen sind beispielsweise 0,1 bis 30 phr.

Sofern ein Kautschukhilfsmittel jedoch mit einem der anderen Inhaltsstoffe der erfindungsgemäßen Kautschukmischungen, beispielsweise dem mindestens einen Kautschuk, dem mindestens einen hydroxylgruppenhaltigen oxidischen Füllstoff, dem mindestens einen Verstärkungsadditiv aus der Reihe der schwefelhaltigen organischen Silane, dem mindestens einen Vernetzer aus der Reihe Schwefel und Schwefelspender, dem mindestens einen Vulkanisationsbeschleuniger, der Polyethylenimin enthält, und/oder dem mindestens einen Prozesshilfsmittel überlappt, ist dieses Kautschukhilfsmittel bevorzugt nur als Mengenergänzung zu den für diesen anderen Inhaltsstoff angegebenen allgemeinen und bevorzugten Mengenangaben in der erfindungsgemäßen Kautschukmischung enthalten.

Besonders bevorzugt sind erfindungsgemäße Kautschukmischungen enthaltend
- 50 bis 100 phr mindestens eines funktionalisierten Synthesekautschuks, bevorzugt 70 - 100 phr, bevorzugt eines funktionalisierten BR-Kautschuks und/oder funktionalisierten SBR-Kautschuks,
- 0 bis 50 phr mindestens eines Naturkautschuks und/ oder unfunktionalisierten Synthesekautschuks, bevorzugt 0 bis 30 phr,
- 20 bis 200 phr mindestens eines hydroxylgruppenhaltigen oxidischen Füllstoffs,
- 0,5 bis 15 phr mindestens eines Verstärkungsadditives aus der Gruppe der schwefelhaltigen organischen Silane, bevorzugt bifunktionelle schwefelhaltige organische Silane, die am Siliciumatom mindestens eine Alkoxy-, Cycloalkoxy-, oder Phenoxygruppe aufweisen und als andere Funktionalität eine Gruppe ausgewählt aus -SCN, -SH oder -Sx- mit x = 2 bis 8, besonders bevorzugt Alkoxysilylgruppen-haltige schwefelhaltige Silane und ganz besonders bevorzugt Trialkoxysilylgruppen-haltige schwefelhaltige organische Silane,
- 0,1 bis 120 phr mindestens eines Ruß, bevorzugt 0,1 bis 100 phr,
- 0,5 bis 10 phr mindestens eines Vernetzers aus der Reihe
   Schwefelspender und Schwefel,
- 0,1 bis 10 phr Zinkoxid,
- 0,1 bis 10 phr mindestens eines Vulkanisationsbeschleunigers, der Polyethylenimin enthält,
- 0,1 bis 30 phr mindestens eines Prozesshilfsmittels, bevorzugt 0,5 - 25 phr, besonders bevorzugt 1 - 15 phr, ganz besonders bevorzugt 5 - 15 phr, enthaltend mindestens eine Fettsäure,
wobei der Gesamtgehalt an Diphenylguanidin (DPG), Di-ortho-tolyl-guanidin (DOTG) und 1-(ortho-Tolyl)biguanid in der Kautschukmischung maximal 0,4 phr, bevorzugt maximal 0,2 phr, besonders bevorzugt maximal 0,1 phr und ganz besonders bevorzugt maximal 0,01 phr beträgt.

Die oben genannten weiteren Vorzugsbereiche der einzelnen Komponenten gelten auch für diese bevorzugten Mischungen.

### Verfahren zur Herstellung der Kautschukmischungen

Ein weiterer Gegenstand der vorliegenden Erfindung ist ein Verfahren zur Herstellung der erfindungsgemäßen Kautschukmischungen, dadurch gekennzeichnet, dass in einem Mischprozess die jeweiligen Komponenten gemischt werden.

Bevorzugt werden mindestens ein Kautschuk in Gegenwart von mindestens einem hydroxylgruppenhaltigen oxidischen Füllstoff, mindestens einem Verstärkungsadditiv aus der Gruppe der schwefelhaltigen organischen Silane, mindestens einem Vulkanisationsbeschleuniger, der Polyethylenimin enthält, und mindestens einem Prozesshilfsmittel sowie gegebenenfalls weiteren Kautschukhilfsmitteln in den genannten allgemeinen und bevorzugten Mengen bei einer Temperatur im Bereich von 50 bis 180°C, besonders bevorzugt 60 bis 170°C, miteinander vermischt.

Die Herstellung der erfindungsgemäßen Kautschukmischungen erfolgt in üblicher Weise in bekannten Mischaggregaten, wie Walzen, Innenmischern, nachgeschalteten Mischwalzwerken und Mischextrudern bei Scherraten von 1 bis 1000 sec⁻¹.

Bevorzugt erfolgt die Herstellung der erfindungsgemäßen Kautschukmischungen in einem dreistufigen Mischprozess.

Bevorzugt werden in einer ersten Mischstufe zunächst Kautschuk, die Füllstoffe sowie ggfs. weitere oben genannte Kautschukhilfsmittel, bevorzugt Alterungsschutzmittel, und der Vulkanisationsbeschleuniger Polyethylenimin, in einem Innenmischer (Kneter) in den Kautschuk eingearbeitet.

Bevorzugt werden der mindestens eine Kautschuk, der mindestens eine hydroxylgruppenhaltige oxidische Füllstoff, das mindestens eine Verstärkungsadditiv aus der Gruppe der schwefelhaltigen organischen Silane, das Polyethylenimin und das mindestens eine Prozesshilfsmittel sowie gegebenenfalls weitere Kautschukhilfsmittel in der ersten Mischstufe in dem Verfahren zur Herstellung der erfindungsgemäßen Kautschukmischungen gemischt.

Mischtemperaturen im Innenmischer können Werte bis zu 180°C erreichen. Die Temperatur in der ersten Mischstufe beträgt bevorzugt 130 bis 180°C, besonders bevorzugt 140 bis 170°C.

Danach erfolgt als zweiter Schritt bevorzugt das sogenannte Nachzwicken, bevorzugt bei 130 - 180°C, besonders bevorzugt bei 160°C. Das Nachzwicken kann beispielsweise in einem Innenmischer erfolgen.

Bevorzugt werden in einer dritten Mischstufe der mindestens eine Vernetzer aus der Reihe Schwefel und Schwefelspender sowie gegebenenfalls der mindestens eine weitere Vulkanisationsbeschleuniger und gegebenenfalls weitere Kautschukhilfsmittel zu der aus der zweiten Mischstufe erhaltenen Kautschukmischung gegeben. Die Temperatur in der dritten Mischstufe beträgt bevorzugt 50 - 130°C, besonders bevorzugt 60 bis 120°C.

Die Zugabe des Polyethylenimins kann zu jedem Zeitpunkt des Mischens erfolgen, vorzugsweise in der ersten Mischstufe bei einer Temperatur im Bereich von 130°C bis 180°C, bevorzugt bei einer Temperatur von 140 bis 170°C.

In einer besonders bevorzugten Ausführungsform des Verfahrens zur Herstellung der erfindungsgemäßen Kautschukmischungen werden
- zunächst der mindestens eine Kautschuk, der mindestens eine hydroxylgruppenhaltige oxidische Füllstoff, das mindestens eine Verstärkungsadditiv aus der Gruppe der schwefelhaltigen organischen Silane, das Polyethylenimin und das mindestens eine Prozesshilfsmittel sowie gegebenenfalls weitere Kautschukhilfsmittel gemischt, bevorzugt bei 130 bis 180°C, und
- im Anschluss der mindestens eine Vernetzer aus der Reihe Schwefel und Schwefelspender sowie gegebenenfalls der mindestens eine weitere Vulkanisationsbeschleuniger und gegebenenfalls weitere Kautschukhilfsmittel zu der erhaltenen Kautschukmischung gegeben, bevorzugt bei 50 - 130°C.

### Verfahren zur Herstellung der Kautschukvulkanisate

Die vorliegende Erfindung betrifft weiterhin ein Verfahren zur Herstellung von Kautschukvulkanisaten, dadurch gekennzeichnet, dass die erfindungsgemäße Kautschukmischung bei Temperaturen von 120 bis 200°C, bevorzugt bei 140 bis 180°C, erhitzt wird.

Das Verfahren zur Herstellung der erfindungsgemäßen Kautschukvulkanisate kann in einem weiten Druckbereich durchgeführt werden, bevorzugt wird es bei einem Druck im Bereich von 10 bis 200 bar durchgeführt.

Weiterer Gegenstand der vorliegenden Erfindung sind Kautschukvulkanisate, die erhältlich sind durch Vulkanisation der erfindungsgemäßen Kautschukmischungen.

### Formkörper

Die erfindungsgemäßen Kautschukvulkanisate eignen sich zur Herstellung von Formkörpern aller Art wie z.B. Reifenbauteilen, technischen Gummiartikeln wie Dämpfungselementen, Walzenbelägen, Belägen von Förderbändern, Riemen, Spinnkopsen, Dichtungen, Golfballkernen, Schuhsohlen, insbesondere eignen sie sich zur Herstellung von Reifen und Reifenteilen, wie Reifenlaufflächen, Subtreads, Karkassen Seitenwänden von Reifen, verstärkten Seitenwänden für Notlaufreifen und Apexmischungen. Reifenlaufflächen schließen dabei auch Laufflächen von Sommer-, Winter- und All-Seasons-Reifen sowie Laufflächen von PKW- und LKW-, Leicht-LKW-Reifen ein.

Bevorzugte Formkörper sind Reifen und Reifenteile enthaltend ein erfindungsgemäßes Kautschukvulkanisat.

### Verwendung

Weiterer Gegenstand der vorliegenden Erfindung ist die Verwendung von Polyethylenimin, insbesondere in einer Menge von 0,01 bis 10 phr, besonders bevorzugt 0,1 bis 5 phr, ganz besonders bevorzugt 0,2 bis 2,5 phr, und des mindestens einen Prozesshilfsmittels enthaltend mindestens eine Fettsäure, insbesondere in einer Menge von 0,1 bis 30 phr, besonders bevorzugt von 1 bis 15 phr, ganz besonders bevorzugt von 5 bis 15 phr, in schwefelvernetzbaren Kautschukmischungen, den daraus erhältlichen Vulkanisaten und den daraus erhältlichen Formkörpern, zur Behandlung, bevorzugt zur Verbesserung, des Zielkonflikts Rollwiderstand/ Nassbremsen.

Die für die in der erfindungsgemäßen Kautschukmischung enthaltenen und gegebenenfalls enthaltenen Komponenten angeführten Beschreibungen und Vorzugsbereiche gelten für u.a. die offenbarten Verfahren und Verwendungen sowie die Vulkanisate, Formkörper und Haftmischungen analog.

Ebenso gelten die angeführten Beschreibungen und Vorzugsbereiche für u.a. die erfindungsgemäßen Kautschukmischungen, Vulkanisate, Formkörper, Verfahren und Verwendungen unabhängig davon, ob sie für vorgenannte im Plural (z.B. Kautschukmischungen) oder im Singular (z.B. Kautschukmischung) offenbart wurden.

Die Erfindung soll anhand der folgenden Beispiele erläutert werden, ohne diese jedoch darauf zu beschränken.

### Ausführungsbeispiele

**Tabelle 1: Liste der Einsatzstoffe, Abkürzungen und Hersteller**

| Handelsname | Erläuterung | Hersteller/Vertrieb |
|---|---|---|
| NIPOL^{®} BR1261 | Funktionalisierter Polybutadien Kautschuk (BR) | Zeon |
| SPRINTAN^{®} SLR 3402 | Funktionalisierter Styrol-butadien-Kautschuk (SBR) (TG -62 °C) | Trinseo |
| CORAX^{®} N 234 | Ruß | Orion Engineered Carbons GmbH |
| TDAE VIVATEC 500 | aromatisches Prozessöl | Hansen & Rosenthal (H&R GRUPPE) |
| PALMERA^{®} A9818 | Stearinsäure | KLK OLEO |
| ANTILUX^{®} 654 | Wachs | Lanxess Deutschland GmbH |
| RHENOGRAN^{®} CBS-80 | Vulkanisationsbeschleuniger, N-Cyclohexyl-2-benzothiazol-sulfenamid (Polymer gebunden; 80% CBS enthaltend) | Lanxess Deutschland GmbH |
| ZINKOXID RS | Zinkoxid Rotsiegel | Grillo Zinkoxid GmbH |
| SCHWEFEL | Schwefel | Kandelium Group GmbH |
| VULKANOX^{®} 4020/LG | Alterungsschutzmittel, *N*-1,3-Dimethylbutyl-*N*'-phenyl-*p*-phenylendiamin (6PPD) | Lanxess Deutschland GmbH |
| ZEOSIL^{®} 1165MP | Kieselsäure | Solvay Deutschland GmbH |
| VULKANOX^{®} HS/LG | Alterungsschutzmittel, 2,2,4-trimethyl-1,2-dihydroquinoline, polymerisiert (TMQ) | Lanxess Deutschland GmbH |
| SI75^{®} | Silan, Bis-(triethoxysilylpropyl)-tetrasulfan | Evonik Resource Efficiency GmbH |
| RHENOGRAN^{®} DPG-80 | Vulkanisationsbeschleuniger, *N*,*N'*-Diphenylguanidin (Polymer gebunden; 80% DPG enthaltend) | Lanxess Deutschland GmbH |
| Rhenocure^{®} DR/S | Vulkanisationsbeschleuniger, 50% Polyethylenimin CAS Nr.: 25987-06-8 und 50% Silika | Lanxess Deutschland GmbH |
| Escorez^{®} 5600 | Aromatisch modifizierter, cycloaliphatischer Kohlenwasserstoffharz | ExxonMobil |
| Vulkalent^{®} G | Vulkanisationsverzögerer, N-Cyclohexylthiophthalimide (CTP) | Lanxess Deutschland GmbH |

Prozesshilfsmittel A: Mischung aus 61,35 Gew.-%, einer Mischung von gesättigten Fettsäuren enthaltend CₙH₂ₙO₂ mit n = 12, 16 und 18 und ungesättigten Fettsäuren enthaltend CₙH₂ₙ₋ₓO₂ mit x= 4 und n = 18, wobei der Anteil von CₙH₂ₙO₂ mit n = 18 größer als 60 Gew.-% beträgt, bezogen auf die Gesamtmenge der Fettsäuren, 17,9 Gew.-% einer Mischung von Alkoholen enthaltend 1,1,1-Trimethylolpropan (TMP), wobei der Anteil von TMP größer als 60 Gew.-% beträgt, bezogen auf die Gesamtmenge der Alkohole, 12,8 Gew.-%, einer Mischung von Fettsäureestern, wobei der Anteil von Stearinsäurestearylester größer als 35 Gew.-% beträgt, bezogen auf die Gesamtmenge der Fettsäureester, und 7,95 Gew.-%, einer Mischung aus sonstigen Inhaltsstoffen, wobei der Anteil von Polyethylenglykol größer als 30 Gew.-% beträgt, bezogen auf die Gesamtmenge der sonstigen Inhaltsstoffe.

### Herstellung der Kautschukvulkanisate

Es wurden die Kautschukmischungen der nicht erfindungsgemäßen Referenzmischung in Anlehnung an WO2010136345A1, welche eine klassische DPG-enthaltende Kautschukmischung darstellt, sowie der Beispiele 1 und 2 und der erfindungsgemäßen Beispiele 3 und 4 gemäß den in Tabelle 2 angegeben Rezepturen hergestellt. Der Unterschied zwischen Beispiel 1 und der Referenzmischung besteht darin, dass der Vulkanisationsbeschleuniger DPG gegen Polyethylenimin ausgetauscht wurde. In Beispiel 2 wurde im Vergleich zu Beispiel 1 der Verzögerer Vulkalent^{®} G (CTP) zugefügt. In den erfindungsgemäßen Beispielen 3 und 4 (erf.) wurden im Vergleich zu Beispiel 2 das Prozesshilfsmittel A zugefügt.

Die Herstellung der Kautschukmischungen erfolgte in folgenden Schritten:

### 1. Mischstufe:

▪ NIPOL^{®} BR1261und SPRINTAN^{®} SLR 3402 werden in einem Innenmischer vorgelegt und ca. 30 Sekunden gemischt.
▪ Zugabe Hälfte ZEOSIL^{®} 1165MP und SI^{®} 75 mischen für ca. 60 Sekunden.
▪ Zugabe Hälfte ZEOSIL^{®} 1165MP, CORAX^{®}N 234, sowie PALMERA^{®} A9818, Vulkanox^{®} 4020, Vulkanox^{®} HS, Antilux^{®} 654, Vivatec 500, Escorez 5600, Rhenocure^{®} DR/S oder RHENOGRAN^{®} DPG-80, Prozesshilfsmittel A, mischen ca. 60 Sekunden, dann kehren. Mischen bis eine Temperatur von 160 °C erreicht ist, danach 4 min mischen bei 160 °C.

Nach Abschluss der ersten Mischstufe wird das Mischstück von einem nachgeschalteten Walzwerk aufgenommen und zu einer Platte, einem Streifen oder Pellets ausgeformt und für 24 Stunden bei Raumtemperatur gelagert. Verarbeitungstemperaturen liegen hierbei bei 70°C.

### 2. Mischstufe:

Danach erfolgte ein Mischen in einem Innenmischer bis eine Temperatur von 160°C erreicht ist (das sogenannte Nachzwicken).

Nach Abschluss der zweiten Mischstufe wird das Mischstück von einem nachgeschalteten Walzwerk aufgenommen und zu einer Platte, einem Streifen oder Pellets ausgeformt und für 24 Stunden bei Raumtemperatur gelagert.

### 3. Mischstufe:

Die Zugabe von Schwefel, Zinkoxid und des Vulkanisationsbeschleunigers Rhenogran^{®} CBS-80 erfolgte im Innenmischer für 2 min bei 100 °C.

Nach Abschluss der dritten Mischstufe wird das Mischstück mit einem Walzwerk zu einer Platte, einem Streifen oder Pellets ausgeformt und für 24 Stunden bei Raumtemperatur gelagert. Verarbeitungstemperaturen liegen hierbei bei 70°C.

Die erfindungsgemäßen Kautschukmischungen 3 und 4 zeigten keine Stippen auf der Oberfläche, sodass von einer guten Vermischung der verwendeten Additive ausgegangen wird.

**Tabelle 2: Bestandteile der erfindungsgemäßen Kautschukmischungen**

| Kautschukrezeptur | Referenz | Beispiel 1 | Beispiel 2 | Beispiel 3 (erf.) | Beispiel 4 (erf.) |
|---|---|---|---|---|---|
| Sprintan^{®} SLR 3402 | 60 | 60 | 60 | 60 | 60 |
| Nipol^{®} BR1261 | 40 | 40 | 40 | 40 | 40 |
| Corax^{®} N234 | 5 | 5 | 5 | 5 | 5 |
| Zeosil^{®} 1165MP | 120 | 120 | 120 | 120 | 120 |
| TDAE Vivatec 500 | 20 | 20 | 20 | 20 | 20 |
| Escorez^{®} 5600 | 30 | 30 | 30 | 30 | 30 |
| SI^{®}75 | 8,5 | 8,5 | 8,5 | 8,5 | 8,5 |
| Palmera^{®} A9818 (Stearic Acid) | 2 | 2 | 2 | 2 | 2 |
| Vulkanox^{®} 4020/LG | 2 | 2 | 2 | 2 | 2 |
| Vulkanox^{®} HS/LG | 2 | 2 | 2 | 2 | 2 |
| Antilux^{®} 654 | 2 | 2 | 2 | 2 | 2 |
| Rhenogran DPG-80 | 2,5 | | | | |
| Rhenocure^{®} DR/S | | 1 | 1 | 1 | 2 |
| Prozesshilfsmittel A | | | | 10 | 10 |
| ZnO Rotsiegel | 2,5 | 2,5 | 2,5 | 2,5 | 2,5 |
| Rhenogran^{®} CBS-80 | 2 | 2 | 2 | 2 | 2 |
| Schwefel | 2 | 2 | 2 | 2 | 2 |
| Vulkalent^{®} G (CTP) | | | 0,3 | 0,3 | 0,3 |

| | | | | | |
|---|---|---|---|---|---|
| Mengenangaben in phr (Gewichtsteile pro 100 Teile Kautschuk) | | | | | |

### Technische Prüfung

Die bei 160°C aus den Kautschukmischungen der Beispiele 1-4 sowie aus der Referenzmischung hergestellten Vulkanisate wurden den unten angegebenen technischen Prüfungen unterzogen. Die ermittelten Werte sind der Tabelle 3 zu entnehmen.

Für die Tests an Prüfkörpern wurden folgende Testverfahren angewandt:

### Mooney-Viskositätsmessung

Die Bestimmung erfolgte mittels Scherscheibenviskosimeter gemäß ASTM D 1646. Die Viskosität lässt sich aus der Kraft, die Kautschuke und Kautschukmischungen ihrer Verarbeitung entgegensetzen, direkt bestimmen. Beim Scherscheibenviskosimeter nach Mooney wird eine geriffelte Scheibe oben und unten mit Probensubstanz umschlossen und in einer beheizbaren Kammer mit etwa zwei Umdrehungen in der Minute bewegt. Die hierzu erforderliche Kraft wird als Drehmoment gemessen und entspricht der jeweiligen Viskosität. Die Probe wird in der Regel eine Minute lang auf 100°C vorgewärmt; die Messung dauert weitere 4 Minuten, wobei die Temperatur konstant gehalten wird. Die Viskosität wird zusammen mit den jeweiligen Prüfbedingungen angegeben, beispielsweise ML (1+4) 100°C (Mooney Viskosität, Rotorgröße L, Vorwärmzeit und Prüfzeit in Minuten, Prüftemperatur).

### Mooney Scorch Messung

Der Mooney-Scorch Versuch ist ein standardisierter Versuch, um das Verhalten der An-Vulkanisation einer Gummiprobe bei erhöhter Temperatur zu charakterisieren. Dabei wird die Zeit bestimmt, nach der die Viskosität um einen festgelegten Wert ansteigt. Die Bestimmung erfolgte mittels Scherscheibenviskosimeter gemäß ASTM D 1646.

### Verwendetes Rheometer (Vulkameter) und An-/ Ausvulkanisationszeit

Der Vulkanisationsverlauf am MDR (moving die rheometer) und dessen analytischen Daten wurden an einem Monsanto-Rheometer MDR 2000 nach ASTM D5289-95 gemessen.

Als Anvulkanisationszeit (t10) wird die Zeit bestimmt, bei der 10% des Kautschuks vernetzt sind. Die gewählte Temperatur betrug 160°C.

Als Ausvulkanisationszeit (t95) wird die Zeit bestimmt, bei der 95% des Kautschuks vernetzt sind. Die gewählte Temperatur betrug 160°C.

Der Wert von Delta S' berechnet sich aus der Differenz zwischen dem höchsten und dem niedrigsten Wert der Rheometerkurve, demnach Sₘₐₓ - Sₘᵢₙ.

### Bestimmung Bruchdehnung, Zugfestigkeit, Modul 300

Diese Messungen erfolgten nach DIN 53504 (Zugversuch, Stab S2, 5-fach Messung).

### Bestimmung der Shore-A-Härte

Messung der Shore Härte (Shore A) nach DIN 53505 bei 23 °C (3-fach Messung).

### Rückprallelastizität

Messung der Rückprallelastizität bei 23 °C und 60 °C (3-fach Messung) nach DIN 53512.

### Bestimmung des DIN Abriebs

Die einfachste Methode zur Bestimmung des abrasiven Verschleißes stellt der sogenannte DIN-Abrieb nach ASTM D5963 dar. Der Prüfkörper aus dem zu prüfenden Elastomer wird dabei unter einer konstanten Anpresskraft und mit konstanter Geschwindigkeit (40 min⁻¹) über einen festgelegten Reibweg (40 m) über einen auf einem rotierenden Zylinder befindlichen Prüfschmirgelbogen geführt. Anschließend wird der Materialverlust in mm³ bestimmt.

### Bestimmung des Verlustfaktors

Der Verlustfaktor tan δ wurde bei 0°C und 60°C und einer Messfrequenz von 10 Hz gemäß dynamischer Dämpfung DIN 53513 bestimmt.

### Bestimmung des Payne Effektes:

Amplitudensweep (Amplitude der Deformation wird variiert) von 0,5% bis 15% bei 60 °C und 10 Hz.

Der Payne Effekt ist die Differenz zwischen G' bei 0,5% Amplitude und G' bei 15% Amplitude.

**Tabelle 3: Ergebnisse der technischen Prüfungen**

| | | Referenz | Beispiel 1 | Beispiel 2 | Beispiel 3 | Beispiel 4 |
|---|---|---|---|---|---|---|
| t10 | min | 1,6 | 1,4 | 1,7 | 2,4 | 2,0 |
| t95 | min | 39,3 | 44,9 | 45,9 | 35,8 | 38,0 |
| Delta S' | dNm | 15,4 | 15,7 | 15,5 | 11,5 | 11,8 |
| MV (1. MS) | MU | 145 | 153 | 157 | 106 | 109 |
| MV (3. MS) | MU | 110 | 135 | 134 | 99 | 108 |
| MSt10 | min | 26,9 | 18,2 | 27,5 | 46,1 | 25,6 |
| Modul 300 | MPa | 12,1 | 11,8 | 12,4 | 9 | 9,9 |
| Bruchdehnung | % | 411 | 411 | 400 | 513 | 487 |
| Zugfestigkeit | MPa | 20,5 | 20,2 | 19,9 | 22,3 | 22 |
| Härte | Shore A | 66 | 68 | 68 | 63 | 63 |
| Rückprall bei 23°C | % | 36 | 37 | 38 | 36 | 36 |
| Rückprall bei 60 °C | % | 54 | 54 | 53 | 55 | 56 |
| DIN Abrieb | mm3 | 90 | 93 | 86 | 82 | 67 |
| Tan delta 0 °C | | 0,255 | 0,264 | 0,261 | 0,276 | 0,268 |
| Tan delta 60 °C | | 0,121 | 0,126 | 0,122 | 0,126 | 0,116 |
| Payne effect (G` (0,5%) - G'(15%)) | MPa | 2,05 | 1,45 | 1,43 | 1,11 | 1,15 |

### Fazit

In den Kautschukmischungen der Beispiele 1 bis 4 wurde das DPG der Referenzmischung durch Polyethylenimin ersetzt. Polyethylenimin wurde zusammen mit Silika und Silan in der ersten Mischstufe zugesetzt. Beispiel 1 zeigt, dass durch Zugabe von Polyethylenimin anstelle von DPG die Mooney Viskosität in der ersten und insbesondere in der dritten Mischstufe deutlich höher liegt im Vergleich zur Referenz. Des Weiteren verschlechtert sich das Mooney Scorch Verhalten. Beispiel 2 zeigt, dass sich durch Zugabe des Verzögerers Vulkalent^{®} G (CTP) im Vergleich zu Beispiel 1 das Mooney Scorch Verhalten zwar verbessern lässt, aber die Mooney Viskosität nicht positiv beeinflusst wird. Durch Zugabe des Prozesshilfsmittels A in den erfindungsgemäßen Beispielen 3 und 4 konnte die Mooney Viskosität deutlich reduziert werden im Vergleich zu den Beispielen 1 und 2 und sogar zur Referenzmischung. Überraschenderweise wurde darüber hinaus die Ausvulkanisationszeit (t95) und das Mooney Scorch Verhalten weiter verbessert. In den auf 60 °C geheizten Mischungen der Beispiele 1 und 2 zeigt sich eine Verbesserung des Payne Effektes bei Verwendung von Polyethylenimin anstelle von DPG in dem Referenzvulkanisat. Dieser Wert als Indikator für die Füllstoffdispersion kann weiter durch die Zugabe des Prozesshilfsmittels A verbessert werden, wie die erfindungsgemäßen Beispiele 3 und 4 zeigen. Auch eine Verbesserung des Zielkonfliktes Nassbremsen/Rollwiderstand ist in den erfindungsgemäßen Beispielen 3 und 4 überraschenderweise erkennbar durch erhöhte tan delta Werte bei 0°C und gleichbleibenden Werten bei 60 °C im Vergleich zu den Beispielen 1 und 2 und sogar zur Referenzmischung. Gleichzeitig nimmt die Abriebbeständigkeit der erfindungsgemäßen Vulkanisate der Beispiele 3 und 4 zu, wie sich anhand der reduzierten DIN Abriebs-Werte erkennen lässt. In dem erfindungsgemäßen Beispiel 4 sind erreicht die Mischung durch Zugabe von 1 phr Polyethylenimin (im Vergleich zu 0,5 phr in Beispiel 3) Mooney Viskositäts- und Mooney Scorch-Werte vergleichbar zur DPG Referenz nach der dritten Mischstufe und sogar bessere Mooney Viskositäts-Werte nach der ersten Mischstufe. Gleichzeitig nimmt die Rollwiderstansperformance im Vergleich zu Beispiel 3 weiter zu.

## Patentansprüche

1. Kautschukmischung enthaltend
- mindestens einen Kautschuk,
- mindestens einen hydroxylgruppenhaltigen oxidischen Füllstoff,
- mindestens ein Verstärkungsadditiv aus der Reihe der schwefelhaltigen organischen Silane,
- mindestens einen Vernetzer aus der Reihe Schwefel und Schwefelspender,
- mindestens einen Vulkanisationsbeschleuniger, der Polyethylenimin enthält, und
- mindestens ein Prozesshilfsmittel, enthaltend mindestens eine Fettsäure,
wobei der Gesamtgehalt an Diphenylguanidin (DPG), Di-ortho-tolyl-guanidin (DOTG) und 1-(ortho-Tolyl)biguanid in der Kautschukmischung maximal 0,4 phr, bevorzugt maximal 0,2 phr, besonders bevorzugt maximal 0,1 phr und ganz besonders bevorzugt maximal 0,01 phr beträgt.

2. Kautschukmischung nach Anspruch 1, **dadurch gekennzeichnet, dass** der mindestens eine Kautschuk ausgewählt ist aus der Gruppe bestehend aus Naturkautschuk und Synthesekautschuken, bevorzugt mindestens ein funktionalisierter Synthesekautschuk ist, besonders bevorzugt mindestens ein funktionalisierter Synthesekautschuk ausgewählt aus der Gruppe bestehend aus funktionalisiertem SBR-, funktionalisiertem BR- und funktionalisiertem IR-Kautschuk, ganz besonders bevorzugt aus funktionalisiertem SBR-und funktionalisiertem BR-Kautschuk.

3. Kautschukmischung gemäß einem der Ansprüche 1 oder 2, **dadurch gekennzeichnet, dass** der mindestens eine hydroxylgruppenhaltige oxidische Füllstoff ausgewählt ist aus der Gruppe bestehend aus Kieselsäuren, synthetischen Silikaten und natürlichen Silikaten, und in einer Menge von 0,1 bis 250 phr, bevorzugt 20 bis 200 phr, besonders bevorzugt von 25 bis 180 phr, ganz besonders bevorzugt 30 - 160 phr in der Kautschukmischung enthalten ist.

4. Kautschukmischung gemäß einem der Ansprüche 1-3, **dadurch gekennzeichnet, dass** die mindestens eine Fettsäure ausgewählt ist aus
- Fettsäuren CₙH₂ₙO₂ mit n = 10 - 30, bevorzugt aus CₙH₂ₙO₂ mit n = 12 - 22, besonders bevorzugt aus CₙH₂ₙO₂ mit n = 10, 12, 14, 16 und 18, ganz besonders bevorzugt aus CₙH₂ₙO₂ mit n = 16 oder n = 18, und
- Fettsäuren CₙH₂ₙ₋ₓO₂ mit x = eine gerade Zahl größer gleich 2 und kleiner gleich 10 und n = 10 - 30, bevorzugt aus CₙH₂ₙ₋ₓO₂ mit x= eine gerade Zahl größer gleich 2 und kleiner gleich 10 und n = 12 - 22, besonders bevorzugt aus CₙH₂ₙ₋ₓO₂ mit x= eine gerade Zahl, die 2 oder 4 ist, und n = 16 oder n= 18, ganz besonders bevorzugt aus CₙH₂ₙ₋ₓO₂ mit x=2 und n= 16 oder 18, oder CₙH₂ₙ₋ₓO₂ mit x=4 und n= 18.

5. Kautschukmischung gemäß einem der Ansprüche 1-4, **dadurch gekennzeichnet, dass** die mindestens eine Fettsäure in einer Menge von 40 - 85 Gew.-% in dem mindestens einen Prozesshilfsmittel enthalten ist, bevorzugt 55 - 80 Gew.-%, , wobei die Gew.-% bezogen sind auf die Gesamtmenge des mindestens einen Prozesshilfsmittels.

6. Kautschukmischung gemäß einem der Ansprüche 1-5, **dadurch gekennzeichnet, dass** die Kautschukmischung 0,1 - 30 phr, bevorzugt 0,5 - 25 phr, besonders bevorzugt 1 - 15 phr, ganz besonders bevorzugt 5 - 15 phr, mindestens eines Prozesshilfsmittels enthält, enthaltend
- 40 - 85 Gew.-%, bevorzugt 55 - 80 Gew.-%, mindestens einer Fettsäure, ausgewählt aus
- Fettsäuren CₙH₂ₙO₂ mit n = 10 - 30, und
- Fettsäuren CₙH₂ₙ₋ₓO₂ mit x= eine gerade Zahl größer gleich 2 und kleiner gleich 10 und n = 10 - 30, wobei mindestens 80 Gew.-%, bevorzugt mindestens 90 Gew.-%, ganz besonders bevorzugt mindestens 95 Gew.-%, bezogen auf die Gesamtmenge der mindestens einen Fettsäure, zurückzuführen ist auf mindestens eine Fettsäure ausgewählt aus Fettsäuren CₙH₂ₙO₂ mit n = 10 - 30, bevorzugt aus CₙH₂ₙO₂ mit n = 12 - 22, besonders bevorzugt aus CₙH₂ₙO₂ mit n = 10, 12, 14, 16 und 18, ganz besonders bevorzugt aus CₙH₂ₙO₂ mit n = 16 oder n = 18,
- 5-50 Gew.-%, bevorzugt 8 - 25 Gew.-%, mindestens eines Alkohols, ausgewählt aus CₙH₂ₙO mit n = 10-26 und 1,1,1-Trimethylolpropan (TMP),
- 5-20 Gew.-%, bevorzugt 8-15 Gew.-% mindestens eines Esters, ausgewählt aus Dodecansäurestearylester, Myristinsäurestearylester, Palmitinsäurestearylester, Palmitinsäuredocosylester, Stearinsäurestearylester, Stearinsäureeicosylester, Stearinsäuretetradecylester, Stearinsäuredocosylester und Arachinsäuredocosylester,
und
- 1-10 Gew.-%, bevorzugt 1-5 Gew.-%, Polyethylenglykol,
wobei die Gew.-% bezogen sind auf die Gesamtmenge des mindestens einen Prozesshilfsmittels.

7. Kautschukmischung gemäß einem der Ansprüche 1-6, **dadurch gekennzeichnet, dass** die Kautschukmischung 0,01 bis 10 phr, besonders bevorzugt 0,1 - 5 phr und ganz besonders bevorzugt 0,2 bis 2,5 phr des Vulkanisationsbeschleunigers Polyethylenimin enthält.

8. Kautschukmischung gemäß einem der Ansprüche 1-7, **dadurch gekennzeichnet, dass** Gesamtgehalt an Guanidin-haltigen Verbindungen in der Kautschukmischung maximal 0,4 phr, bevorzugt maximal 0,2 phr, besonders bevorzugt maximal 0,1 phr und ganz besonders bevorzugt maximal 0,01 phr beträgt.

9. Kautschukmischung gemäß Anspruch 1, **dadurch gekennzeichnet, dass** die Kautschukmischung
- 50 bis 100 phr mindestens eines funktionalisierten Synthesekautschuks, bevorzugt 70 - 100 phr, bevorzugt eines funktionalisierten BR-Kautschuks und/oder funktionalisierten SBR-Kautschuks,
- 0 bis 50 phr mindestens eines Naturkautschuks und/ oder unfunktionalisierten Synthesekautschuks, bevorzugt 0 bis 30 phr,
- 20 bis 200 phr mindestens eines hydroxylgruppenhaltigen oxidischen Füllstoffs,
- 0,5 bis 15 phr mindestens eines Verstärkungsadditives aus der Gruppe der schwefelhaltigen organischen Silane, bevorzugt bifunktionelle schwefelhaltige organische Silane, die am Siliciumatom mindestens eine Alkoxy-, Cycloalkoxy-, oder Phenoxygruppe aufweisen und als andere Funktionalität eine Gruppe ausgewählt aus -SCN, -SH oder-Sx-mit x = 2 bis 8, besonders bevorzugt Alkoxysilylgruppen-haltige schwefelhaltige Silane und ganz besonders bevorzugt Trialkoxysilylgruppen-haltige schwefelhaltigen organischen Silane,
- 0,1 bis 120 phr mindestens eines Ruß, bevorzugt 0,1 bis 100 phr,
- 0,5 bis 10 phr mindestens eines Vernetzers aus der Reihe
Schwefelspender und Schwefel,
- 0,1 bis 10 phr Zinkoxid,
- 0,1 bis 10 phr mindestens eines Vulkanisationsbeschleunigers, der Polyethylenimin enthält, und
- 0,1 bis 30 phr mindestens eines Prozesshilfsmittels, bevorzugt 0,5 - 25 phr, besonders bevorzugt 1 - 15 phr, ganz besonders bevorzugt 5 - 15 phr, enthaltend mindestens eine Fettsäure,
enthält.

10. Kautschukmischung gemäß einem der Ansprüche 1-9, **dadurch gekennzeichnet, dass** die Kautschukmischung mindestens einen Vulkanisationsverzögerer enthält, bevorzugt ausgewählt aus der Gruppe bestehend aus Sulfenamid-Verzögerern, ganz besonders bevorzugt ausgewählt aus N-Cyclohexylthiophthalimid und N-Phenyl-N-(trichlormethylsulfenyl)-benzolsulfonamid, meist bevorzugt N-Cyclohexyl-thiophthalimid, bevorzugt in einer Menge von 0,01 - 10 phr, besonders bevorzugt von 0,05 - 5 phr, ganz besonders bevorzugt von 0,1 - 1 phr, meist bevorzugt von 0,1 - 0,5 phr.

11. Verfahren zur Herstellung der erfindungsgemäßen Kautschukmischungen nach einem der Ansprüche 1-10, **dadurch gekennzeichnet, dass** in einem Mischprozess die jeweiligen Komponenten gemischt werden.

12. Verfahren gemäß Anspruch 11, **dadurch gekennzeichnet, dass** in dem Verfahren zur Herstellung der Kautschukmischung
- zunächst der mindestens eine Kautschuk, der mindestens eine hydroxylgruppenhaltige oxidische Füllstoff, das mindestens eine Verstärkungsadditiv aus der Gruppe der schwefelhaltigen organischen Silane, der des Vulkanisationsbeschleuniger Polyethylenimin und das mindestens eine Prozesshilfsmittel sowie gegebenenfalls weitere Kautschukhilfsmittel gemischt werden, bevorzugt bei 130 bis 180°C, und
- im Anschluss der mindestens eine Vernetzer aus der Reihe Schwefel und Schwefelspender sowie gegebenenfalls der mindestens eine weitere Vulkanisationsbeschleuniger und gegebenenfalls weitere Kautschukhilfsmittel zu der erhaltenen Kautschukmischung gegeben werden, bevorzugt bei 50 - 130°C.

13. Vulkanisate, erhältlich durch Vulkanisation von Kautschukmischungen gemäß einem der Ansprüche 1 bis 10.

14. Formkörper, bevorzugt technische Gummiartikel und Reifen, enthaltend ein oder mehrere Kautschukvulkanisate gemäß Anspruch 13.

15. Verwendung von Polyethylenimin, bevorzugt in einer Menge von 0,01 bis 10 phr, besonders bevorzugt 0,1 bis 5 phr, ganz besonders bevorzugt 0,2 bis 2,5 phr, und des mindestens einen Prozesshilfsmittels enthaltend mindestens eine Fettsäure, bevorzugt in einer Menge von 0,1 bis 30 phr, besonders bevorzugt von 1 bis 15 phr, ganz besonders bevorzugt von 5 bis 15 phr, in schwefelvernetzbaren Kautschukmischungen, den daraus erhältlichen Vulkanisaten und den daraus erhältlichen Formkörpern, zur Behandlung, bevorzugt zur Verbesserung, des Zielkonflikts Rollwiderstand/ Nassbremsen.
